# EUROPEAN PATENT SPECIFICATION

(11) **EP 1 163 623 B1**
(45) Date of publication and mention of the grant of the patent: **16.10.2002**
(21) Application number: 00913873.6
(22) Date of filing: 10.03.2000
(51) Int. Cl.: G06K 1/00

(54) **METHODS AND APPARATUS FOR AUTHENTICATING THE DOWNLOAD OF INFORMATION ONTO A SMART CARD**
VERFAHREN UND VORRICHTUNG ZUM AUTHENTIFIZIEREN DES LADENS VON INFORMATIONEN IN EINE CHIPKARTE
PROCEDES ET APPAREIL POUR AUTHENTIFIER LE TELECHARGEMENT D'INFORMATIONS SUR UNE CARTE INTELLIGENTE

(30) Priority: 11.03.1999 US 123775 P
(43) Date of publication of application: 19.12.2001
(73) Proprietor: AMERICAN EXPRESS TRAVEL RELATED SERVICES COMPANY, INC., New York, NY 10285 (US)
(72) Inventor: PETIT, Frederic, Sandy, UT 84094 (US)
(74) Representative: Hanna, Peter William Derek
(86) International application number: US0006251
(87) International publication number: WO00054208

(56) References cited:
- WO-A-98/51037
- GB-A- 2 303 524

## Description

### BACKGROUND OF THE INVENTION

### 1. Technical Field

The present invention relates, generally, to integrated circuit cards ("smart cards") and, more particularly, to systems for authenticating, via cryptographic techniques, the download of information ("applets") onto a smart card via a trusted third party.

### 2. Background Information

The term "smart card" refers generally to wallet-sized or smaller cards incorporating a microprocessor or microcontroller to store and manage data within the card. More complex than magnetic-stripe and stored-value cards, smart cards are characterized by sophisticated memory management and security features. A typical smart card includes a microcontroller embedded within the card plastic which is electrically connected to an array of external contacts provided on the card exterior. A smart card microcontroller generally includes an electrically-erasable and programmable read-only memory (EEPROM) for storing user data, random access memory (RAM) for scratch storage, and read only memory (ROM) for storing the card operating system. Relatively simple microcontrollers are adequate to control these functions. Thus, it is not unusual for smart cards to utilize 8-bit, 5 MHZ microcontrollers with about 8K or more of EEPROM memory (for example, the Motorola 6805 or Intel 8051 microcontrollers).

A number of standards have been developed to address general aspects of integrated circuit cards, e.g.: *ISO 7816-1, Part 1: Physical characteristics* (1987); *ISO 7816-2, Part 2: Dimensions and location of the contacts* (1988); *ISO 7816-3, Part 3: Electronic signals and transmission protocols* (1989, Amd.1 1992, Amd. 2 1994); *ISO 7816-4, Part 4: Inter-industry commands for interchange* (1995); *ISO 7816-5, Part 5: Numbering system and registration procedure for application identifiers* (1994, Amd. 1 1995); *ISO*/*IEC DIS 7816-6, Inter-industry* *data elements* (1995); *ISO*/*IEC WD 7816-7, Part 7: Enhanced inter-industry commands* (1995); and *ISO*/*IEC WD 7816-8, Part 8: Inter-industry security architecture* (1995). These standards are hereby incorporated by reference. Furthermore, general information regarding magnetic stripe cards and chip cards can be found in a number of standard texts, e.g., Zoreda & Oton, SMART CARDS (1994), and Rankl & Effing, SMART CARD HANDBOOK (1997).

Smart cards can contain programming and data to support multiple applications. Some smart cards can be updated to add new applications and/or data after they are issued. Smart card environments have been developed that allow applets to be downloaded onto smart cards by a variety of parties. Accordingly, a typical smart card function set may include a function wherein the smart card issuer (e.g., American Express) may allow an external vendor or other third party to complete the secure download of applets onto the smart card. In such a case, it is important that a trust relationship exists between the issuer and the third party in charge of download. Unfortunately, however, current smart card systems and standards do not provide a guarantee to the issuer that the download from the third party to the smart card was completed successfully. As a result, the third party may, for any number of reasons, fake a download or unintentionally fail to sense a download error.

Thus, a need exists to overcome these and other limitations of the prior art.

### BRIEF SUMMARY OF THE INVENTION

In accordance with this invention, a system and method for authenticating the download of information to an information device is provided. In a preferred embodiment of the invention, the information device is a smart card, however, the information device can be virtually any device capable of receiving digital information, for example, a personal digital assistant (PDA) or a cell phone.

In accordance with further aspects of the invention, an information owner (for example, the issuer of a smart card) delegates the information download to a third party.

In accordance with yet another aspect of the invention a digitally-computed acknowledgment of the download event is produced using a digital "seal" or signature (depending upon the type of cryptographic algorithm used). The seal or signature is preferably a cryptogram generated by the information device using cryptographic keys resident on the information device itself. This acknowledgment is then made available to the information owner, who may then test the cryptogram to determine whether the download was successful.

### BRIEF DESCRIPTION OF THE SEVERAL VIEWS OF THE DRAWINGS

The subject invention will hereinafter be described in conjunction with the appended drawing figures, wherein like numerals denote like elements, and:
**FIG. 1** is a schematic overview of a distributed communication system including a smart card, smart card reader, issuer, and a third party connected over a network;
**FIG. 2** is a flowchart depicting an exemplary method for computing a digital acknowledgment; and
**FIG. 3** is a flowchart depicting an exemplary issuer verification procedure.

### DETAILED DESCRIPTION OF PREFERRED EXEMPLARY EMBODIMENTS

Systems and methods in accordance with various aspects of the present invention allow an issuer to authenticate the download of software onto a smart card via a trusted third party. More particularly, a signed download system provides a secure method of downloading and verifying the successful download of applications (e.g., "applets") onto a smart card. The term "applet" as used herein is intended to refer to a portable segment of software code. It will be appreciated that applications, applets and/or data can be downloaded to the smart card in accordance with the present invention. It will be appreciated that the invention not only applies to the download of information, but to the updating and deleting of information as well. A variety of software environments may be appropriate in this context, including, for example, the object-oriented Java programming language or a Windows environment. As mentioned above, smart cards are characterized by sophisticated memory management and security features. For additional information regarding such cards, see, for example, application serial number 09/012,750, filed January 23, 1998, entitled "Methods and Apparatus for a Travel-Related Multi-Function Smart card," While the invention is ideally suited for downloading information to a smart card, it will be appreciated that the invention is not limited to smart cards as the destination of the downloaded information.

The present invention is described herein in terms of functional block components and various processing steps. It should be appreciated that such functional blocks may be realized by any number of hardware and/or software components configured to perform the specified functions. For example, the present invention may employ various integrated circuit components, e.g., memory elements, digital signal processing elements, look-up tables, and the like, which may carry out a variety of functions under the control of one or more microprocessors or other control devices. In addition, those skilled in the art will appreciate that the present invention may be practiced in any number of data communication contexts and that the various systems described herein are merely exemplary applications for various aspects of the invention. General techniques that are known to those skilled in the art are not described in detail herein.

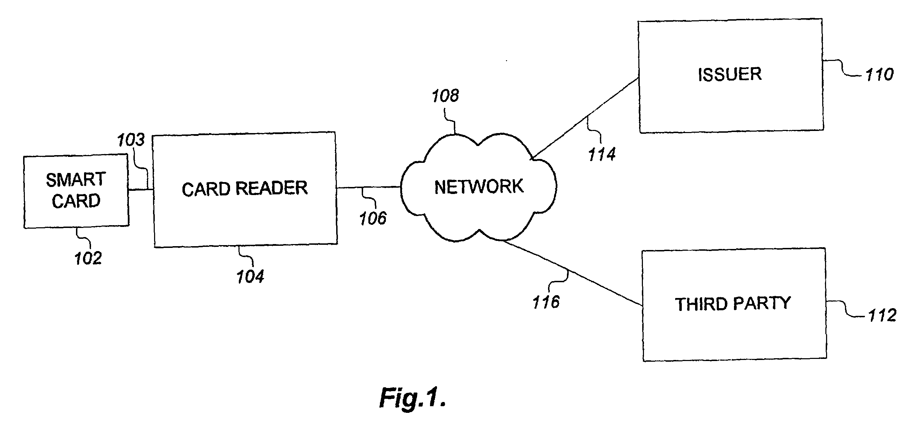

Referring to **FIG. 1,** an information owner, for example, an issuer 110 (e.g., a bank card provider, credit card issuer and/or the like) delegates to a third party 112 the task of downloading an applet to a smart card 102, wherein the smart card 102 is suitably interfaced with a smart card reader 104 using a communication protocol 103. The smart card reader 104 is connected to a network 108 via a communication link 106. Issuer 110 and third party 112 are also suitably connected to network 108. It will be appreciated that the issuer can delegate downloads to more than one third party. It will also be appreciated that the various components need not be interconnected via a single network.

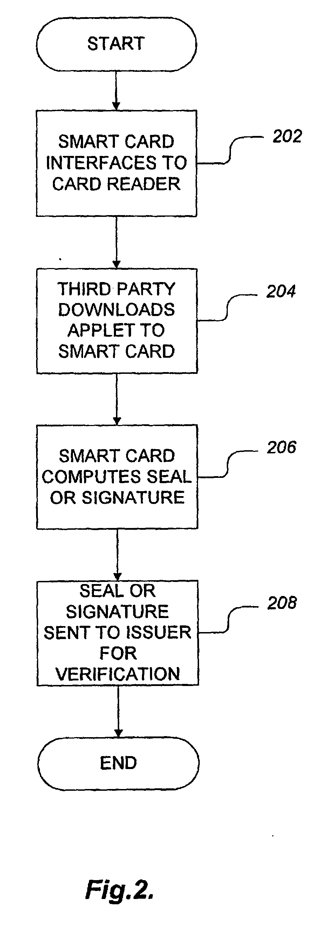

Referring now to **FIG. 1** and **FIG. 2,** in a preferred embodiment, the process is initiated when smart card 102 is inserted into smart card reader 104 and appropriate handshaking and authentication take place (Step 202). In Step 204, third party 112 initiates the download of an applet via network 108 onto smart card 102 (Step 204). This can occur in a variety of ways. For example, the connection between the card and the card reader may have initiated a connection to the issuer. The issuer may have communicated to the card reader that a display be provided which allows a user to select whether or not an application should be downloaded. The user may select the download of the application which triggers the download from the third party. Alternatively, the application may be downloaded without operator intervention. It will be appreciated that the download can be the loading of new information, the updating of existing information or the deletion of existing information. It will also be appreciated that the information to be loaded, updated or deleted can be an application, an applet, data, or a combination thereof. Once the downloading operation is complete, the processor of smart card 102 computes a seal or signature (described below) based upon the downloaded applet (Step 206). The identification of the third party may be used in computing the seal or signature. Finally, in Step 208, the computed seal or signature is suitably transmitted to issuer 110 for verification (Step 208). It should be understood that the exemplary process illustrated may include more or less steps or may be performed in the context of a larger processing scheme. Furthermore, the various flowcharts presented in the drawing figures are not to be construed as limiting the order in which the individual process steps may be performed.

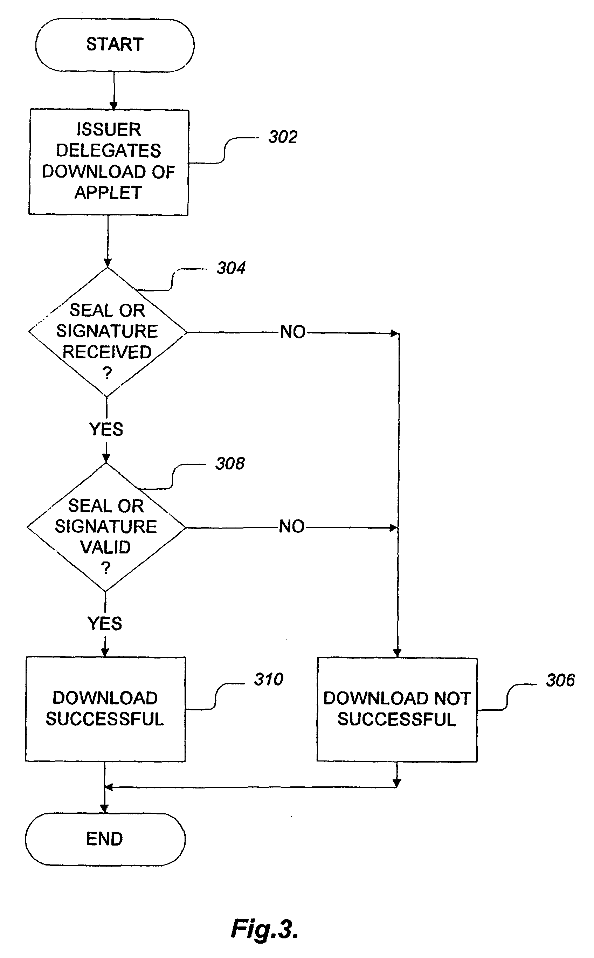

From the issuer's point of view, referring now to **FIG. 3**, the seal or signature may be used to verify the download. That is, after the issuer delegates the download of the applet (Step 302), the issuer waits an appropriate amount of time for receipt of a seal or signature (Step 304). The method of delegation varies based on the components involved. For example, the delegation may be a message or the information to be downloaded may be supplied to the third party from the issuer. If no acknowledgment is received within the specified time period, the download is considered unsuccessful (Step 306). In an actual embodiment of the system, the seal or signature can not be computed until after the download takes place. Thus, the acknowledgment provides a notification to the issuer. The issuer can take action based upon the notification, for example by not issuing payment. In other embodiments, the issuer can cause the information to be removed from the card. In yet another embodiment, the authentication takes place upon initiation of the download, but the download does not complete unless a successful authentication occurs. If a seal or signature is received ("Yes" branch from Step 304), the issuer tests the received acknowledgment against an expected result based upon any suitable method, such as, for example, based on a known key (in the case of a symmetrical algorithm) or plurality of keys (in the case of an asymmetrical algorithm) (Step 308). If the seal or signature is suitably verified, the download is considered successful (Step 310). Otherwise, the download is considered unsuccessful (Step 304).

As mentioned above, the present invention produces a digitally-computed acknowledgment of the download event using any known acknowledgment method, such as, for example, a digital "seal" or signature (depending upon the type of cryptographic algorithm used). Those skilled in the art will appreciate that a variety of algorithms may be employed to create this digitally computed acknowledgment. In a preferred embodiment, the seal or signature is preferably a cryptogram generated by the smart card using cryptographic keys resident on the smart card itself.

In an exemplary embodiment, a symmetrical DES algorithm (Data Encryption Standard) is employed based on a key known to both issuer 110 and smart card 102 (for example, a triple-DES algorithm). It will be appreciated, however, that any number of other symmetrical or asymmetrical techniques may be used in the context of the present invention. More particularly, there are two general categories of encryption algorithms: symmetric and asymmetric. Symmetric algorithms use the same key for encryption and decryption, for example, DEA (data encryption algorithm) which uses a 56-bit key to encrypt 64-bit blocks of data. The acknowledgment generated using a symmetric algorithm is a "seal," for example, a message authentication code (MAC). Asymmetric algorithms, in contrast, use two different keys: one secret key and one public key. The acknowledgment resulting from an asymmetric algorithm is a digital signature. The RSA algorithm, for example, uses two such keys and exploits the computational complexity of factoring very large prime numbers. Additional information regarding these and other cryptographic principles can be found in a number of standard texts, such as, for example: Seberry & Pieprzyk, CRYPTOGRAPHY: AN INTRODUCTION TO COMPUTER SECURITY (1989); Rhee, CRYPTOGRAPHY AND SECURE COMMUNICATIONS (1994); Stinson, CRYPTOGRAPHY: THEORY AND PRACTICE (1995); CONTEMPORARY CRYPTOGRAPHY: THE SCIENCE OF INFORMATION INTEGRITY (1992); and Schneier, APPLIED CRYPTOGRAPHY (2d ed. 1996).

As mentioned above, the present invention is particularly advantageous in the context of so-called smart card environments which allow multiple parties to download applets onto a card. The present invention is not so limited, however, and may also be employed in non-smart card environments, for example, PDAs and cell phones, etc. That is, a signed download may be performed based on transfer of information from an information owner to an information device, wherein the information owner receives a digitally computed acknowledgment from the information device responsive to the download event. Furthermore, the information owner may delegate the download task to a third party.

Although the invention has been described herein in conjunction with the appended drawings, those skilled in the art will appreciate that the scope of the invention is not so limited. Modifications in the selection, design, and arrangement of the various components and steps discussed herein may be made without departing from the scope of the invention.

## Claims

1. A system for authenticating download of information, said system comprising:
an information device (102) having a signature;
at least one external device (110) capable of transferring blocks of information to said information device (102), wherein: said blocks of information belong to an information owner (110); said information device (102) is configured to perform an acknowledgement process; said acknowledgement process computes, based upon the contents of said signature, a verifiable acknowledgement of the transferred information and sends said computed acknowledgment to said information owner (110) for verification.

2. The system of Claim 1, wherein said verifiable acknowledgment can only be interpreted by said information owner (110).

3. The system of Claim 1, wherein said verifiable acknowledgement is uniquely related to said transferred blocks of information.

4. The system of Claim 1, wherein said verifiable acknowledgement can be tested and validated by said information owner (110).

5. The system of Claim 1, wherein said external device is remotely located from said information owner (110) and wherein said external device transfers said blocks of information on behalf of said information owner (110).

6. The system of Claim 1, wherein said information device (102) is a smart card.

7. The system of Claim 6, further comprising a card reader (104), wherein said smart card (102) communicates with said external device (110) via said card reader.

8. The system of Claim 1, wherein said information device (102) is a personal digital assistant.

9. The system of Claim 1, wherein said acknowledgement process uses cryptography to produce said verifiable acknowledgement of said transferred blocks of information.

10. The system of Claim 1, wherein said acknowledgement process is performed by said information device (102).

11. The system of Claim 1, further comprising at least one network (108), wherein said at least one network facilitates communications among said information owner (110), said external device (110) and said information device (102).

12. The system of Claim 1, wherein said transferred blocks of information include new information to be stored on said information device (102).

13. The system of Claim 1, wherein said transferred blocks of information include an update of existing information stored on said information device.

14. The system of Claim 1, wherein said transferred blocks of information include information used to overwrite existing information stored on said information device (102).

15. The system of Claim 1, wherein said transferred blocks of information include an applet.

16. The system of claim 1, wherein said transferred blocks of information include an application.

17. The system of claim 1, wherein said transferred blocks of information include data.

18. A method for allowing an information owner to download information to an information device (102) having a signature, said method comprising the steps of:
a. said information owner (110) initiating download of said information to said information device; and
b. said information device (102) performing an acknowledgement process, wherein said acknowledgement process computes, based upon the_contents of said signature, a verifiable acknowledgement of the transferred information and sends said computed verifiable acknowledgement to said information owner (110) for verification.

19. The method of Claim 18, further comprising:
a. the information device making the verifiable acknowledgement available to a validating party (110); and
b. the validating party verifying said verifiable acknowledgement.

20. The method of Claim 19, wherein said validating party is said information owner (110) and wherein said information owner previously performed the step of delegating, to a third party (112), said download of said information.

21. The method of Claim 18, wherein the information device (102) is a smart card.

22. The method of Claim 18, wherein said information device (102) is a personal digital assistant.

23. The method of Claim 18, wherein said information download includes new information to be stored on said information device (102).

24. The method of Claim 18, wherein said information download includes an update of existing information stored on said information deice (102).

25. The method of Claim 18, wherein said information download includes information used to overwrite existing information stored on said information device (102).

26. The method of Claim 18, wherein said information download comprises an applet.

27. The method of Claim 18, wherein said information download comprises an application.

28. The method of Claim 18, wherein said information download comprises data.

29. An updated information device (102), wherein said information device is created by the process comprising:
a. a first party downloading information to said information device, wherein said information device has a signature and is initially configured to be updatable;
b. said information device computing based upon the contents of said signature an acknowledgment of said information download;
c. said information device making said computed acknowledgement available to a validating party; and
d. said validating party verifying the computed acknowledgement.

30. The updated information device of Claim 29, wherein said validating party is a second party and wherein said second party previously delegated, to said first party, said download of information.

31. The updated information device of Claim 29, wherein said updated information device is a smart card.

32. The updated information device of Claim 29, wherein said updated information device is a personal digital assistant.

## Patentansprüche

1. System zum Authentifizieren des Ladens von Informationen, wobei das System umfasst:
Eine Informationseinrichtung (102) mit einer Signatur;
Mindestens eine externe Einrichtung (110) mit der Fähigkeit des Übertragens von Informationsblöcken zur Informationseinrichtung (102), wobei: Die Informationsblöcke zu einem Informationsbesitzer (110) gehören; die Informationseinrichtung (102) konfiguriert ist zum Durchführen eines Quittungsprozesses, dieser Quittungsprozess basierend auf dem Inhalt der Signatur eine nachweisbare Quittung der übertraqenen Information berechnet und diese berechnete Quittung an den Informationsbesitzer (110) zur Nachprüfung sendet.

2. System nach Anspruch 1, wobei die nachprüfbare Quittung nur durch den Informationsbesitzer (110) interpretierbar ist.

3. System nach Anspruch 1, wobei die nachprüfbare Quittung sich in einzigartiger Weise auf die übertragenen Informationsblöcke bezieht.

4. System nach Anspruch 1, wobei die überprüfbare Quittung getestet werden kann und bestätigt durch den Informationsbesitzer (110).

5. System nach Anspruch 1, wobei die externe Einrichtung entfernt angeordnet ist von dem Informationsbesitzer (110) und wobei die externe Einrichtung die Informationsblöcke im Namen des Informationsbesitzers (110) überträgt.

6. System nach Anspruch 1, wobei die Informationseinrichtung (102) eine Smartcard bzw. prozessorenthaltende Chipkarte ist.

7. System nach Anspruch 6, außerdem einen Kartenleser (104) umfassend, wobei die Smartcard (102) mit der externen Einrichtung (110) über den Kartenleser kommuniziert.

8. System nach Anspruch 1, wobei die Informationseinrichtung (102) ein persönlicher digitaler Assistent bzw. PDA ist.

9. System nach Anspruch 1, wobei der Quittungsprozess Kryptographie zum Produzieren der überprüfbaren Quittung der übertragenen Informationsblöcke verwendet.

10. System nach Anspruch 1, wobei der Quittungsprozess von der Informationseinrichtung (102) durchgeführt wird.

11. System nach Anspruch 1, außerdem mindestens ein Netz (108) umfassend, wobei das mindestens eine Netz Kommunikationsvorgänge zwischen dem Informationsbesitzer (110), der externen Einrichtung (110) und der Informationseinrichtung (102) unterstützt.

12. System nach Anspruch 1, wobei die übertragenen Informationsblöcke neue, in der Informationseinrichtung (102) zu speichernde Information enthalten.

13. System nach Anspruch 1, wobei die übertragenen Informationsblöcke eine Aktualisierung existierender Information enthalten, die informationseinrichtungsseitig gespeichert ist.

14. System nach Anspruch 1, wobei die übertragenen Informationsblöcke Information einschließen, die verwendet wird zum Überschreiben existierender, in der Informationseinrichtung (102) gespeicherter Information.

15. System nach Anspruch 1, wobei die übertragenen Informationsblöcke ein Applet, bzw. kleines Anwendungsprogramm einschließen.

16. System nach Anspruch 1, wobei die übertragenen Informationsblöcke eine Anwendung einschließen.

17. System nach Anspruch 1, wobei die übertragenen Informationsblöcke Daten einschließen.

18. Verfahren, um es einem Informationsbesitzer zu ermöglichen, Information auf eine Informationseinrichtung (102) mit einer Signatur zu laden, wobei das Verfahren die Schritte umfasst:
a. Der Informationsbesitzer (110) veranlasst das Laden der Information auf die Informationseinrichtung; und
b. die Informationseinrichtung (102) führt einen Quittungsprozess durch, wobei der Quittungsprozess basierend auf den Inhalt der Signatur eine überprüfbare Quittung der übertragenen Information berechnet und die berechnete überprüfbare Quittung zu dem Informationsbesitzer (110) zur Überprüfung sendet.

19. Verfahren nach Anspruch 18, außerdem umfassend, dass:
a. Die Informationseinrichtung, die überprüfbare Quittung einer validierenden Partei (110) verfügbar macht; und
b. die validierende Partei die überprüfbare Quittung verifiziert.

20. Verfahren nach Anspruch 19, wobei die validierende Partei der Informationsbesitzer (110) ist und wobei der Informationsbesitzer zuvor den Schritt ausgeführt hat, das Laden der Information an eine dritte Partei (112), zu delegieren.

21. Verfahren nach Anspruch 18, wobei die Informationseinrichtung (102) eine Smartcard ist.

22. Verfahren nach Anspruch 18, wobei die Informationseinrichtung ein persönlicher digitaler Assistent bzw. ein PDA ist.

23. Verfahren nach Anspruch 18, wobei die geladene Information neue in der Informationseinrichtung (102) zu speichernde Information einschließt.

24. Verfahren nach Anspruch 18, wobei die geladene Information eine Aktualisierung existierender, in der Informationseinrichtung (102) gespeicherter Information einschließt.

25. Verfahren nach Anspruch 18, wobei die geladene Information Information einschließt, die verwendet wird zum Überschreiben existierender, in der Informationseinrichtung (102) gespeicherte Information.

26. Verfahren nach Anspruch 18, wobei die geladene Information ein Applet bzw. ein kleines Anwendungsprogramm umfasst.

27. Verfahren nach Anspruch 18, wobei die geladene Information eine Anwendung umfasst.

28. Verfahren nach Anspruch 18, wobei die geladene Information Daten umfasst.

29. Eine aktualisierte Informationseinrichtung (102), wobei die Informationseinrichtung kreiert ist durch den Prozess, umfassend:
a. Eine erste zu ladende Information der Informationseinrichtung, wobei die Informationseinrichtung eine Signatur hat und anfänglich als aktualisierbar konfiguriert ist;
b. Die Informationseinrichtung basierend auf dem Inhalt der Signatur eine Quittung der geladenen Information berechnet;
c. Die Informationseinrichtung die berechnete Quittung einer validierenden Partei verfügbar macht; und
d. die validierende Partei die berechnete Quittung verifiziert.

30. Aktualisierte Informationseinrichtung nach Anspruch 29, wobei die validierende Partei eine zweite Partei ist und wobei die zweite Partei zuvor an die erste Partei das Laden der Information delegiert hat.

31. Aktualisierte Informationseinrichtung nach Anspruch 29, wobei die aktualisierte Informationseinrichtung eine Smartcard ist.

32. Aktualisierte Informationseinrichtung nach Anspruch 29, wobei die aktualisierte Informationseinrichtung ein persönlicher digitaler Assistent bzw. ein PDA ist.

## Revendications

1. Dispositif destiné à authentifier un transfert d'informations, ledit dispositif comprenant:
un dispositif d'information (102) présentant une signature ;
au moins un dispositif externe (110) permettant de transférer des blocs d'informations audit dispositif d'information (102), dans lequel: lesdits blocs d'informations appartiennent à un propriétaire d'informations (110); ledit dispositif d'information (102) est configuré de manière à exécuter un traitement d'accusé de réception ; ledit traitement d'accusé de réception calcule, sur la base du contenu de ladite signature, un accusé de réception pouvant être vérifié des informations transférées et envoie ledit accusé de réception audit propriétaire d'informations (110) en vue d'une vérification.

2. Dispositif selon la revendication 1, dans lequel ledit accusé de réception pouvant être vérifié peut seulement être interprété par ledit propriétaire d'informations (110).

3. Dispositif selon la revendication 1, dans lequel ledit accusé de réception pouvant être vérifié est uniquement associé auxdits blocs d'informations transférés.

4. Dispositif selon la revendication 1, dans lequel ledit accusé de réception pouvant être vérifié peut être contrôlé et validé par ledit propriétaire d'informations (110).

5. Dispositif selon la revendication 1, dans lequel ledit dispositif externe est situé à distance par rapport audit propriétaire d'informations (110) et dans lequel ledit dispositif externe transfère lesdits blocs d'informations au nom dudit propriétaire d'informations (110).

6. Dispositif selon la revendication 1, dans lequel ledit dispositif d'information (102) est une carte à puce.

7. Dispositif selon la revendication 6, comprenant, en outre, un lecteur de carte (104), dans lequel ladite carte à puce (102) communique avec ledit dispositif externe (110) par l'intermédiaire dudit lecteur de carte.

8. Dispositif selon la revendication 1, dans lequel ledit dispositif d'information (102) est un assistant numérique personnel.

9. Dispositif selon la revendication 1, dans lequel ledit traitement d'accusé de réception utilise la cryptographie afin de produire ledit accusé de réception pouvant être vérifié desdits blocs d'informations transférés.

10. Dispositif selon la revendication 1, dans lequel ledit traitement d'accusé de réception est réalisé par ledit dispositif d'information (102).

11. Dispositif selon la revendication 1, comprenant, en outre, au moins un réseau (108), dans lequel ledit au moins un réseau facilite les communications entre ledit propriétaire d'informations (110), ledit dispositif externe (110) et ledit dispositif d'information (102).

12. Dispositif selon la revendication 1, dans lequel lesdits blocs d'informations transférés comprennent de nouvelles informations à mémoriser sur ledit dispositif d'information (102).

13. Dispositif selon la revendication 1, dans lequel lesdits blocs d'informations transférés comprennent une actualisation d'informations existantes mémorisée dans ledit dispositif d'information.

14. Dispositif selon la revendication 1, dans lequel lesdits blocs d'informations transférés comprennent des informations utilisées afin de réécrire des informations existantes mémorisées sur ledit dispositif d'information (102).

15. Dispositif selon la revendication 1, dans lequel lesdits blocs d'informations transférés comprennent un sous-programme.

16. Dispositif selon la revendication 1, dans lequel lesdits blocs d'informations transférés comprennent une application.

17. Dispositif selon la revendication 1, dans lequel lesdits blocs d'informations transférés comprennent des données.

18. Procédé destiné à permettre à un propriétaire d'informations de transférer des informations sur un dispositif d'information (102) présentant une signature, ledit procédé comprenant les étapes de:
a. initiation, par ledit propriétaire d'informations (110), du transfert desdites informations vers ledit dispositif d'information ; et
b. exécution, par ledit dispositif d'information (102), d'un traitement d'accusé de réception, dans lequel ledit traitement d'accusé de réception calcule, sur la base du contenu de ladite signature, un accusé de réception pouvant être vérifié des informations transférées et envoie ledit accusé de réception pouvant être vérifié calculé audit propriétaire d'informations (110) en vue d'une vérification.

19. Procédé selon la revendication 18, comprenant, en outre:
a. la mise à disposition, par le dispositif d'information, de l'accusé de réception pouvant être vérifié pour une partie de validation (110) ; et
b. la vérification, par la partie de validation, dudit accusé de réception pouvant être vérifié.

20. Procédé selon la revendication 19, dans lequel ladite partie de validation est ledit propriétaire d'informations (110), et dans lequel ledit propriétaire d'informations réalise préalablement l'étape de délégation, à une troisième partie (112), dudit transfert desdites informations.

21. Procédé selon la revendication 18, dans lequel ledit dispositif d'information (102) est une carte à puce.

22. Procédé selon la revendication 18, dans lequel ledit dispositif d'information (102) est un assistant numérique personnel.

23. Procédé selon la revendication 18, dans lequel ledit transfert d'informations comprend de nouvelles informations à mémoriser sur ledit dispositif d'information (102).

24. Procédé selon la revendication 18, dans lequel ledit transfert d'informations comprend une actualisation d'informations existantes mémorisées sur ledit dispositif d'information (102).

25. Procédé selon la revendication 18, dans lequel ledit transfert d'informations comprend des informations utilisées afin de réécrire des informations existantes mémorisées sur ledit dispositif d'information (102).

26. Procédé selon la revendication 18, dans lequel ledit transfert d'informations comprend un sous-programme.

27. Procédé selon la revendication 18, dans lequel ledit transfert d'informations comprend une application.

28. Procédé selon la revendication 18, dans lequel ledit transfert d'informations comprend des données.

29. Dispositif d'information actualisé (102) dans lequel ledit dispositif d'information est créé par le procédé comprenant:
a. le transfert d'informations, par une première partie, vers ledit dispositif d'information, dans lequel ledit dispositif d'information présente une signature et est initialement configuré afin de pouvoir être actualisé ;
b. le calcul, par ledit dispositif d'information, sur la base du contenu de ladite signature, d'un accusé de réception dudit transfert d'informations ;
c. la mise à disposition, par ledit dispositif d'information, dudit accusé de réception calculé pour une partie de validation ; et
d. la vérification, par ladite partie de validation, de l'accusé de réception calculé.

30. Dispositif d'information actualisé selon la revendication 29, dans lequel ladite partie de validation est une seconde partie et dans lequel ladite seconde partie délègue préalablement à ladite première partie ledit transfert d'informations.

31. Dispositif d'information actualisé selon la revendication 29, dans lequel ledit dispositif d'information actualisé est une carte à puce.

32. Dispositif d'information actualisé selon la revendication 29, dans lequel ledit dispositif d'information est un assistant numérique personnel.
